# EUROPÄISCHE PATENTSCHRIFT

(11) **EP 2 795 998 B1**
(45) Veröffentlichungstag und Bekanntmachung des Hinweises auf die Patenterteilung: **07.06.2023**
(21) Anmeldenummer: 12812219.9
(22) Anmeldetag: 19.12.2012
(51) Int. Cl.: H05B 45/382

(54) **LED-KONVERTER MIT RESONANTEM WANDLER**
LED DRIVER WITH RESONANT CONVERTER
CIRCUIT DE COMMANDE DE LED AVEC CONVERTISSEUR RESONANT

(30) Priorität: 23.12.2011 DE 102011089873
(43) Veröffentlichungstag der Anmeldung: 29.10.2014
(73) Patentinhaber: Tridonic GmbH & Co. KG, 6851 Dornbirn (AT)
(72) Erfinder: PEREIRA, Eduardo, CH-8854 Siebnen (CH)
(74) Vertreter: Rupp, Christian
(86) Internationale Anmeldenummer: PCT/EP2012/076075
(87) Internationale Veröffentlichungsnummer: WO 2013/092656

(56) Entgegenhaltungen:
- DE-A1-102008 064 399
- DE-A1-102010 031 233
- DE-A1-102010 031 233
- US-A1- 2010 052 557
- US-A1- 2011 080 102
- US-A1- 2011 193 495

## Beschreibung

Die vorliegende Erfindung betrifft im Allgemeinen den Betrieb von Leuchtdioden (LEDs), wobei unter Leuchtdioden anorganische Leuchtdioden, aber auch organische Leuchtdioden (OLEDs), zu verstehen sind. Folgend wird stellvertretend der Begriff LED verwendet.

Es ist bekannt, dass die Lichtabstrahlung bzw. die Helligkeit, einer LED mit dem Stromfluss durch die LED korreliert. Zur Helligkeitsregelung (Dimmen) werden LEDs daher vorzugsweise in einem Modus betrieben, in dem der Stromfluss durch die LED geregelt wird.

Grundsätzlich ist es bereits bekannt, eine LED-Strecke, die eine oder mehrere in Serie geschaltete LEDs aufweisen kann, ausgehend von einer Konstantstromquelle mit elektrischer Leistung zu versorgen. Es ist ebenfalls bekannt, zur Ausführung eines Dimmens eine Pulsweiten-Modulation (PWM) zu verwenden, so dass in den Einschaltzeitdauern eines PWM-Impulszugs eine Konstantstromregelung durchgeführt werden kann. Beim Dimmen wird dann das Tastverhältnis des PWM-Signals verändert.

Zur Bereitstellung der Versorgungsspannung der Konstantstromquelle kann beispielsweise eine aktiv getaktete PFC-Schaltung (Power Factor Correction Circuit, Leistungsfaktorkorrekturschaltung) verwendet werden.

Schließlich sind auch noch weitere Anforderungen beim Betrieb von LEDs zu beachten. Beispielsweise wird üblicherweise eine galvanische Trennung zwischen der LED-Strecke und der Versorgungsspannung des PFCs, typischerweise eine Netzspannung, gefordert.

Diese Anforderungen werden beispielsweise durch einen LED-Konverter mit getakteter Konstantstromquelle bereitgestellt, wie sie z.B. aus der DE 10 2010 031239 A1 bekannt ist. Die dort beschriebene getaktete Konstantstromquelle kann auch als Flyback-Wandler ausgeformt sein. Ein Flyback-Wandler ist auch bekannt aus 10 2010 031233 A1.

Es sind weiter LED-Konverter bekannt, die eine variable Last, d.h. eine verschiedene, variable Anzahl von LEDs oder LEDs verschiedener Art an der LED-Strecke, versorgen können. Insbesondere deshalb wird der Einsatz von z.B. Flyback-Wandlern bevorzugt, da diese Art an Wandler relativ flexibel eingestellt werden können und mit ihnen gut auf eine Änderung der durch den LED-Konverter betriebenen Last reagiert werden kann (verursacht beispielsweise durch ein Hinzufügen oder ein Entfernen von LEDs und/oder durch eine Temperaturänderung).

Dabei kann beispielsweise die Anzahl von LEDs zwischen 1 und 16 variieren. Somit muss der LED-Konverter beispielsweise in der Lage sein, für eine (einzige) LED beispielsweise eine Ausgangsspannung von 3 Volt bereitzustellen, während er für beispielsweise 16 in Serie geschaltete LEDs eine Ausgangsspannung von 48 Volt bereitstellen muss.

Insbesondere bei der Verwendung eines Flyback-Wandlers ist die Menge der durch ihn übertragbaren Energie jedoch begrenzt, da die Bauteile, insbesondere die primärseitige Wicklung, nicht unbegrenzt vergrößert werden kann.

Ein weiteres Problem des Flyback-Wandlers ist, dass primärseitig eine Steuerschaltung für die Steuerung bzw. die Regelung des Schalters des Flyback-Wandlers vorgesehen ist. Damit die Steuerschaltung die Steuerung bzw. Regelung durchführen kann, erfolgt typischerweise eine Messsignal-Rückführung von der Sekundärseite des Flyback-Wandlers zu der Steuerschaltung (Feedback), wobei zur Beibehaltung der galvanischen Trennung diese Rückführung ebenfalls galvanisch getrennt erfolgen muss.

Um dies zu erreichen wird beispielsweise ein Optokoppler eingesetzt, der es erlaubt, das Messsignal galvanisch getrennt zurückzuführen. Der Einsatz eines Optokopplers verursacht jedoch relativ hohe Kosten im Verhältnis zu den Gesamtkosten der Schaltung. Weiterhin sind die Lebensdauer und auch die zeitliche Beständigkeit des Optokopplers begrenzt.

Seit langem sind weiterhin resonante Wandler (Resonanzwandler) beispielsweise aus dem Bereich der Vorschaltgeräte für Leuchtstofflampen bekannt. Dort werden resonante Wandler z.B. eingesetzt, um eine für den Betrieb einer Leuchtstofflampe notwendige hohe Spannung zu erzeugen.

Beim resonanten Wandler (engl. "LLC resonant converter") handelt es sich insbesondere um eine Form eines Gleichspannungswandlers, der zur Energieübertragung mit einem Schwingkreis arbeitet. Der resonante Wandler wandelt dabei eine Gleichspannung in eine ein- oder mehrphasige Wechselspannung um und wird für einen optimalen Betrieb typischerweise mit annähernd konstanter Last betrieben. Resonante Wandler arbeiten bei konstantem Betrieb (d. h. bei einem Betrieb mit konstanter Last) an einem vordefinierten Frequenz-Arbeitspunkt auf der Resonanzkurve.

Nachteilig ist indessen, dass bei einer Laständerung durch Veränderung der LED-Strecke (andere LEDs bzw. eine andere Anzahl von LEDs in der Serienschaltung der LEDs) auch der Frequenz-Arbeitspunkt auf einer Resonanzkurve verschiebt und der resonante Wandler damit nicht mehr optimal arbeitet.

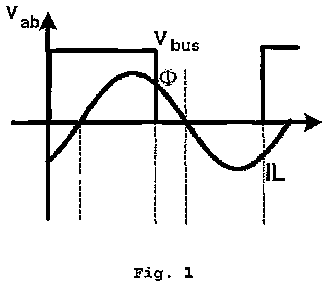

Dies bedeutet jedoch, dass sich nicht nur die Spannungsüberhöhung ("voltage gain"), d.h. das Verhältnis von Busspannung zu Ausgangsspannung, verändert, sondern auch, dass sich der Phasenwinkel Φ (Winkel zwischen Strom IL und Spannung V_{bus}, wie in Fig. 1 veranschaulicht) verändert.

Somit kann es zu einem reaktiven Bereich, d. h. zu einer durch eine Phasenverschiebung verursachte Erhöhung des Blindstroms kommen, bei dem der Wirkungsgrad des resonanten Wandlers abnimmt.

Somit wird der Frequenz-Arbeitspunkt für den resonanten Wandler bei Verwendung von z.B. 16 LEDs sehr viel näher an einem Resonanzpeak liegen als bei der Verwendung von nur einer LED, bei der der Frequenz-Arbeitspunkt stark nach oben, d. h. weg von dem Resonanzpeak, verschoben ist. Somit wird der Wirkungsgrad beim Betrieb mit einer LED deutlich verringert sein.

Die Erfindung stellt sich daher die Aufgabe, einen LED-Konverter bereitzustellen, der mit einem resonanten Wandler ausgeführt ist und der einen variablen und flexiblen Betrieb bei sich verändernder Last erlaubt. Gleichzeitig soll die galvanisch getrennt erfolgende Signalrückführung entfallen.

Die Erfindung löst dieses Problem mit einer Vorrichtung, einem Verfahren und einer integrierten Schaltung nach den unabhängigen Ansprüchen. Weitere vorteilhafte Ausgestaltungen der Erfindung sind Gegenstand der abhängigen Ansprüche.

Die Erfindung stellt daher einen LED-Konverter nach Anspruch 1 bereit.

Die Steuereinheit kann den Spitzenwert durch Abtasten einer Spannung/eines Stroms an einem Messwiderstand ermitteln. Die Steuereinheit kann einen jeweils durch das Abtasten erfasster höheren Wert, den momentanen Spitzenwert, speichern.

Die Steuereinheit kann einen gespeicherten Wert synchronisiert zu der Schaltung des potentialniedrigerer Schalters der Halbbrücke zurücksetzen.

Die Steuereinheit kann bei Erkennung eines Fehlerzustandes die Frequenz der Taktung und/oder ein Tastverhältnis der Halbbrücke verändern, und dadurch die übertragene Leistung verringern, und/oder kann den LED-Konverter abschalten.

Die Steuereinheit kann die den resonanten Wandler versorgende Gleichspannung durch eine Ansteuerung eines Schalters einer PFC-Schaltung einstellen.

Die Steuereinheit kann einen Sollwert für die den resonanten Wandler versorgende Gleichspannung an eine PFC-Schaltung übermitteln.

Der Serien/Parallel-Resonanzkreis kann einen Transformator versorgen, der an seinem Ausgang sekundärseitig die Versorgungsspannung für die LED-Strecke bereitstellt. Sekundärseitig, vorzugsweise an einem Ausgang des Transformators, kann eine Diodenschaltung vorgesehen sein, die einen Speicherkondensator speist, der die Versorgungsspannung für die LED-Strecke bereitstellt.

In einem weiteren Aspekt stellt die Erfindung ein Verfahren nach Anspruch 9 bereit.

Schließlich stellt die Erfindung in einem noch weiteren Aspekt eine Integrierte Schaltung, vorzugsweise einen Microcontroller und/oder ASIC oder eine Kombination daraus, bereit, die zur Durchführung eines Verfahrens, wie es oben beschrieben wurde, ausgeführt und/oder programmiert ist.

Die Erfindung wird nun im Folgenden auch mit Blick auf die Zeichnungen beschrieben.

Es zeigen:
- Fig. 1: schematisch einen Zusammenhang zwischen einer Busspannung, einem LED-Strom und einem Phasenwinkel.
- Fig. 2: ein Blockschaltdiagramm eines LED-Konverters gemäß der Erfindung.
- Fig. 3: schematisch ein Ausführungsbeispiel für einen LED-Konverter gemäß der Erfindung.
- Fig. 4: ein Flussdiagramm für eine Startsequenz, wie sie erfindungsgemäß durch eine Steuereinheit ausgeführt wird.
- Fig. 5: schematisch einen Zusammenhang zwischen Abtastung einer Rückführgröße in dem resonanten Wandler und einer Veränderung der Netzspannung und einer Frequenz der Taktung der Halbbrücke des resonanten Wandlers.
- Fig. 6: ein Flussdiagramm für eine Laufzeitsteuerung/-regelung, wie sie erfindungsgemäß durch eine Steuereinheit ausgeführt wird.
- Fig. 7: schematisch ein erfindungsgemäßes Verfahren zur Ermittlung eines Spitzenwertes für die Rückführgröße.

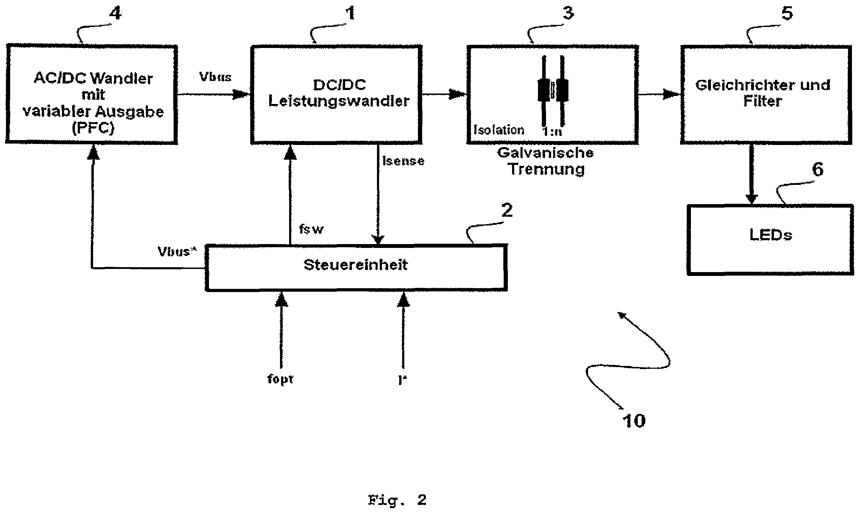

Die Erfindung wird nun zunächst mit Blick auf Fig. 2 beschrieben, die ein Blockschaltdiagramm für einen erfindungsgemäßen LED-Konverter 10 zeigt. Die Erfindung löst das oben genannte Problem insbesondere dadurch, dass der Frequenz-Arbeitspunkt des resonanten Wandlers 1 auf der Resonanzkurve auf einen Bereich, insbesondere einen zumindest einseitig begrenzten Frequenzkorridor fₒₚₜ, beschränkt wird, in dem der Wirkungsgrad des resonanten Wandlers hoch ist. Dieser Frequenzkorridor fₒₚₜ ist in einer Steuereinheit 2 vorab, vorzugsweise werksseitig, abgelegt.

Gemäß einem Ausführungsbeispiel sind daher innerhalb dieses Frequenzkorridors fₒₚₜ Veränderungen der Arbeitsfrequenz des resonanten Wandlers 1 möglich. Die Frequenz f_{sw}, mit der der resonanten Wandler 1 arbeitet bzw. betrieben wird, ist also nicht vollständig fest. Dadurch kann eine ausreichende Adaptivität des resonanten Wandlers 1 auf unterschiedliche Lasten (beispielsweise unterschiedliche Arten und/oder unterschiedliche Anzahlen von LEDs) an einer LED-Strecke 6 erlaubt werden.

Um diese Adaptivität des resonanten Wandlers 1 zu ermöglichen, wird zur Anpassung an die Last die den resonanten Wandler 1 versorgende Gleichspannung bzw. die Busspannung V_{bus} (DC-Spannung) verändert, wenn sich der Frequenz-Arbeitspunkt aus den Grenzen des Frequenzkorridors bewegt, d. h. wenn die Arbeitsfrequenz des resonanten Wandlers 1 auf Grund eines Abgleichs mit der Rückführgröße außerhalb des zumindest einseitig begrenzten Frequenzkorridors liegen würde.

Gemäß der Erfindung ist daher die Steuereinheit 2 dazu eingerichtet, die geregelte/gesteuerte Arbeitsfrequenz für den resonanten Wandler zu regeln/steuern. Vorzugsweise erfasst die Steuereinheit 2 dabei als Rückführgröße den Strom Iₛₑₙₛₑ durch den resonanten Wandler 1. Dies ist schematisch in Fig. 2 gezeigt. In Fig. 2 ist zudem eine galvanische Trennung 3 nach dem resonanten Wandler 1 gezeigt. Die Steuereinheit 2 stellt und/oder regelt weiterhin die Busspannung V_{bus}, beispielsweise mittels eines Ansteuersignals V_{bus*} für einen AC/DC-Wandler mit variabler Ausgabe, bzw. für einen Schalter der PFC-Schaltung 4.

Es ist selbstverständlich auch möglich, dass die Steuereinheit 2 der PFC-Schaltung 4 einen Sollwert vorgibt, auf den hin die PFC-Schaltung 4 die Busspannung/Gleichspannung V_{bus} einstellt. Dies ist insbesondere dann der Fall, wenn die Busspannung V_{bus} nicht an die Steuereinheit 2 zurückgeführt wird, sondern bereits in der PFC-Schaltung 4 selbst eine Regelung für die Busspannung V_{bus} vorgesehen ist.

Der Steuereinheit 2 kann neben dem Frequenzkorridor fₒₚₜ dabei auch ein Dimm-Sollwert I* oder alternativ oder zusätzlich gegebenenfalls auch ein fester Arbeitspunkt für eine Arbeitsfrequenz des resonanten Wandlers 1 vorgegeben werden.

Wenn nunmehr ein Dimm-Signal I* eingeht, bei dem die Steuereinheit 2 eine Arbeitsfrequenz des resonanten Wandlers 1 einstellen müsste, die außerhalb des vorgegebenen optimalen Frequenzkorridors fₒₚₜ liegt, wird die Steuereinheit 2 den Sollwert V_{bus*} für die PFC-Schaltung 4 (beispielsweise ein aktiv getakteter PFC) verändern, so dass die den resonanten Wandler 1 versorgende Busspannung V_{bus} verändert, insbesondere verringert wird.

Die Steuereinheit 2 steuert/regelt dabei insbesondere die Frequenz f_{sw} für die Taktung einer Halbbrücke des resonanten Wandlers 1, um die Arbeitsfrequenz des resonanten Wandlers 1 einzustellen.

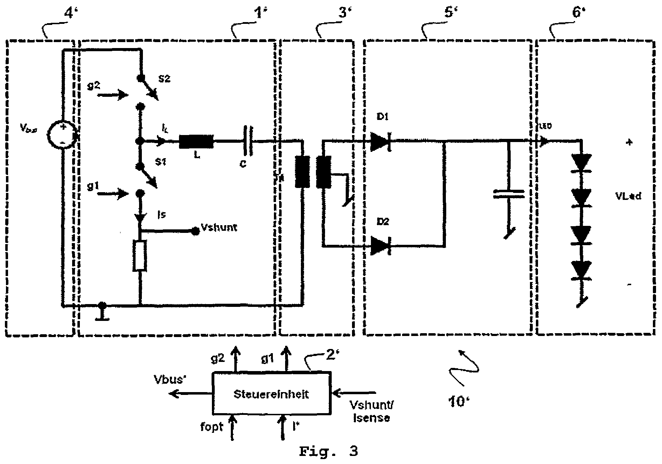

Mit Blick auf Fig. 3 erfolgt nun eine Beschreibung eines Ausführungsbeispiels für eine Schaltungsanordnung für einen LED-Konverter 10' gemäß der Erfindung.

Neben der Busspannung V_{bus} (Block 4') zeigt die Fig. 3 einen resonanten Wandler 1', der eine mit zwei wechselseitig getakteten Schaltern S1, S2 ausgebildete Halbbrücke aufweist, die mit der Busspannung V_{bus} versorgt ist. Die Schalter S1, S2 sind insbesondere Feldeffekttransistoren (FETs), z.B. MOSFETS. Die Schalter S1, S2 werden dabei von einer Steuereinheit 2' über jeweils einen Gate-Anschluss g1, g2 angesteuert.

Am Mittelpunkt der Halbbrücke schließt sich ein Serienresonanzkreis (alternativ ein Parallelresonanzkreis) aus einer Induktivität L und einer Kapazität C an, wobei dieser Serienresonanzkreis wiederum einen Überträger 3' (Transformator T1 zur galvanischen Trennung) versorgt.

An dem Ausgang des Überträgers ist sekundärseitig eine Diodenschaltung gezeigt, die einen Speicherkondensator (ELCO) speist. Diese Anordnung entspricht dem Block "Gleichrichter und Filter" 5 aus Fig. 2. Die Gleichspannung (DC-Spannung) an dem Speicherkondensator versorgt wiederum eine LED-Strecke 6'.

Die Schalter S1 und S2 werden dabei idealer Weise von der Steuereinheit 2' so angesteuert, dass sie abwechselnd für die Dauer einer halben Periode der Resonanzfrequenz der Induktivität L und der Kapazität C durchgeschaltet sind.

Dazu erzeugt die Steuereinheit 2' vorzugsweise zwei Rechteckspannungen mit jeweils einer Einschaltdauer, z.B. von 45%, wobei darauf zu achten ist, dass keine Überlappungen vorliegen dürfen. Um den resonanten Wandler zu regeln, muss daher von der Steuereinheit 2' nur die jeweilige Frequenz f_{sw} zur Ansteuerung der Schalter S1, S2 geregelt werden, bzw. die Totzeit entsprechend verlängert oder verkürzt werden.

Bei Volllast haben die Schalter S1, S2 daher lediglich eine kleine Totzeit und werden im Gegentakt vorzugsweise mit der Resonanzfrequenz des Serienresonanzkreises angesteuert.

Dementsprechend stellt sich an dem Speicherkondensator ein fast sinusförmiger Spannungsverlauf ein. Die primärseitige Spannung kann dabei etwa die Hälfte der Busspannung V_{bus} betragen. Da die Schalter S1, S2 jeweils für die Dauer einer halben Periode vorzugsweise der Resonanzfrequenz des Serienresonanzkreises eingeschaltet werden können, befindet sich der Strom im Resonanzkreis beim Ein- und Ausschalten immer z.B. gerade im Nulldurchgang, was zu geringen Schaltverlusten führt.

Soll die Leistung des resonanten Wandlers reduziert werden, so kann die Schaltfrequenz bei konstanter Einschaltdauer reduziert werden. Im Prinzip befindet sich der Serienresonanzkreis dann z.B. immer noch in Resonanz, allerdings wird dann die Schwingung für die Dauer der Totzeit, in der beide Schalter S1, S2 sperren, erhalten und dann am Ende der Totzeit an gleicher Stelle fortgesetzt.

Der Spannungsverlauf an dem Speicherkondensator kann daher für die Dauer der Totzeit im Scheitelwert quasi eingefroren werden, wobei der Speicherkondensator die Ladung bis zum Ende der Totzeit speichern kann. Die Schaltfrequenz des resonanten Wandlers kann dann bei geringer Last z.B. bis auf 0 Hz reduziert werden.

Zurückkehrend zu Fig. 2 ist die Steuereinheit 2 also insbesondere dazu eingerichtet, ein Regelverfahren/eine Steuerung für die Frequenz f_{sw} des resonanten Wandlers 2 und der Busspannung V_{bus} durchzuführen, wie sie im Folgenden beschrieben wird.

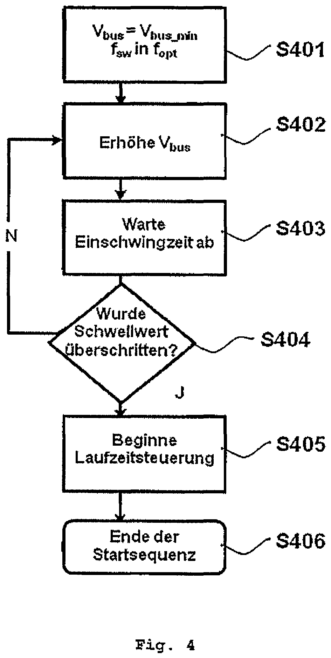

Dabei wird nun auch Bezug auf Figs. 1 und 4 genommen, die einen Teil des erfindungsgemäßen Verfahrens beschreibt.

Da bei einem Einschalten des LED-Konverters 10 noch nicht bekannt ist, wie groß die Last an der LED-Strecke 6 ist, insbesondere also nicht bekannt ist, welche Art und/oder welche Anzahl von LEDs angeschlossen ist, führt die Steuereinheit 2 zunächst eine Startsequenz aus.

In der Startsequenz (Schritt S401) wird demnach der resonante Wandler 1 von der Steuereinheit 2 zunächst mit einer Frequenz f_{sw} so betrieben, dass der Frequenz-Arbeitspunkt in dem vorbestimmten Frequenzkorridor fₒₚₜ, insbesondere an einem bestimmten Arbeitspunkt auf der Resonanzkurve, liegt. Dabei wird die Busspannung V_{bus}, die den resonanten Wandler 1 versorgt, möglichst gering gehalten.

Ausgehend von dem Minimalwert für die Busspannung wird im Folgenden die Busspannung V_{bus} graduell erhöht (Schritte S402 bis S404), während gleichzeitig die Rückführgröße, z.B. der Strom Iₛₑₙₛₑ, gemessen und/oder von der Steuereinheit 2 erfasst wird.

Die Rückführgröße wird vorzugsweise an einem Shunt zwischen Masse und dem potentialniedrigen Schalter (der Schalter S1 in Fig. 3) der Halbbrücke des resonanten Wandlers 1 bestimmt. Alternativ oder zusätzlich kann auch eine Spannung Vₛₕᵤₙₜ von der Steuereinheit 2 als Rückführgröße an dem Shunt erfasst werden.

Zwischen einer Veränderung der Busspannung V_{bus} und einer erneuten Überprüfung bzw. einem erneuten Abtasten der Rückführgröße kann zunächst eine Einschwingzeit abgewartet werden (Schritt S403).

Wenn die Rückführgröße (beispielsweise ein Spitzenwert *Max* des Stroms durch den potential niedrigeren Schalter der Halbbrücke, allgemein einen Spitzenwert Max für die Rückführgröße die für den resonanten Wandler 1 erfasst wird) einen Sollwert *ref* erreicht (Schritt 404), wird die Busspannung nicht mehr weiter erhöht. Die Steuereinheit 2 wechselt dann in einen Modus zur Laufzeitsteuerung des resonanten Wandlers (Schritt S405) und die Startsequenz ist damit beendet (Schritt S406). Andernfalls kehrt das Verfahren zu Schritt S402 zurück und erhöht die Busspannung V_{bus} erneut.

Die Busspannung wird natürlich nur solange festgehalten, wie die Frequenz f_{sw} des resonanten Wandlers innerhalb des Frequenzkorridors fₒₚₜ liegt.

Bevorzugt wird die Startsequenz jedes Mal durchlaufen, wenn die Netzspannung neu an den LED-Konverter 10 angelegt wird.

Die Rückführgröße, die wie gesagt beispielsweise ein Spitzenwert *Max* für die Rückführgröße an dem Shunt ist, ist hierbei nur ein Beispiel für eine mögliche Größe, die die durch den resonanten Wandler 1 übertragene Leistung wiedergibt. Aus dieser Rückführgröße kann auch auf den momentanen Arbeitspunkt geschlossen werden und entsprechend die Frequenz f_{sw} durch die Steuereinheit 2 eingestellt werden.

Alternativ können auch andere primärseitige oder sekundärseitig erfasste Rückführgrößen verwendet werden. Wie bereits beschrieben, ist bei der Rückführung von sekundärseitigen Rückführgrößen eine zusätzliche galvanische Trennung, beispielsweise mittels eines Optokopplers notwendig, was, wie oben bereits erwähnt, zu erhöhten Kosten für die Schaltung führt, und daher vorliegend nicht bevorzugt wird.

Beispielsweise könnte der erlaubte Arbeitspunktbereich, bzw. der wenigstens einseitig begrenzte Frequenzkorridor fₒₚₜ, bei einer Arbeitsfrequenz von beispielsweise 80 kHz für die primärseitige Taktung des resonanten Wandlers 1 in einem Bereich von 80 kHz ± 10 kHz liegen. Der Bereich kann jedoch auch ca. ± 20 %, vorzugsweise ± 15 %, um eine optimale Arbeitsfrequenz betragen, und den zumindest einseitigen Frequenzkorridor fₒₚₜ bestimmen.

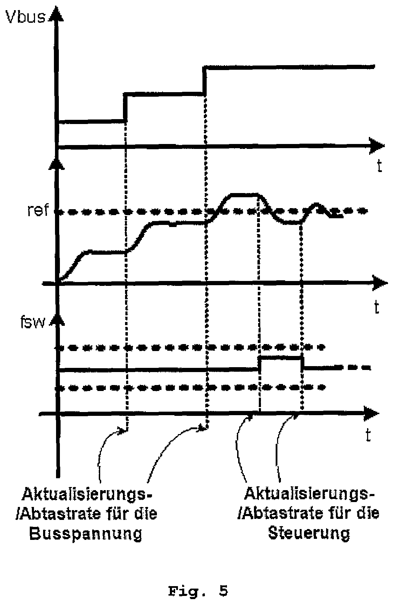

Die Auswirkungen der Startsequenz auf verschiedene Größen des LED-Konverters 10 sind in Fig. 5 schematisch gezeigt. Dabei ist in Fig. 5 oben der Verlauf der Busspannung V_{bus} gezeigt, während in Fig. 5 in der Mitte Werte für die von der Steuereinheit 2 erfasste Rückführgröße aufgetragen sind und ebenfalls der Schwellwert *ref* dargestellt ist (gestrichelte Linie).

Wenn der Schwellwert *ref* für die Rückführgröße durch graduelle Erhöhung der Busspannung V_{bus} überschritten wurde, so kann wie in Fig. 5 unten gezeigt, kurzzeitig die Frequenz f_{sw} für die Taktung der Schalter der Halbbrücke kurzzeitig erhöht werden, bis die erfasste Rückführgröße wieder unterhalb des Schwellwerts ref liegt.

In Fig. 5 ist dazu eine Abtastrate einerseits für die Rückführgröße, auf deren Basis die Busspannung V_{bus} angepasst wird, und andererseits eine Abtastrate der Rückführgröße gezeigt, auf deren Basis die Frequenz f_{sw} für die Taktung der Schalter der Halbbrücke des resonanten Wandlers 1 erfolgt, um den Frequenz-Arbeitspunkt innerhalb des Frequenzkorridors fₒₚₜ zu halten. Der Frequenzkorridor fₒₚₜ ist in Fig. 5 unten durch gestrichelte Linien kenntlich gemacht.

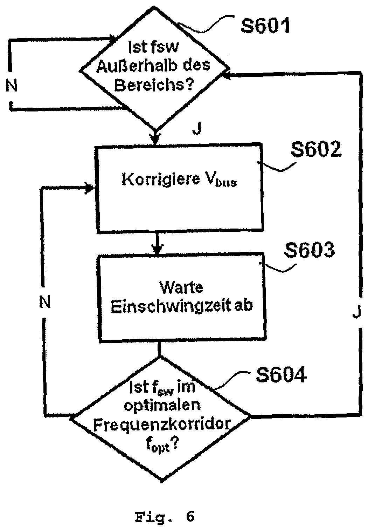

Das erfindungsgemäße Verfahren zur Laufzeitsteuerung/- regelung ist in Fig. 6 gezeigt. Dabei wird kontinuierlich geprüft, die Frequenz f_{sw} für die Taktung der Schalter der Halbbrücke des resonanten Wandlers 2 außerhalb des Frequenzkorridors fₒₚₜ liegt (Schritt S601), d.h. ob die Frequenz f_{sw} auf Grund der erfassten Rückführgröße verändert werden muss, um den Frequenz-Arbeitspunkt in dem Frequenzkorridor zu halten.

Ist dies nicht der Fall, so wird die Busspannung V_{bus} korrigiert (siehe Schritt S602). Nach möglichem Abwarten einer Einschwingzeit (Schritt S603) wird wiederum geprüft, ob durch die Frequenz f_{sw} für die Taktung der Schalter der Halbbrücke ein Betrieb in dem optimalen Frequenzkorridor fₒₚₜ (Frequenzband) erfolgt (Schritt S604). Liegt die Frequenz f_{sw} für die Taktung der Schalter, und damit der Frequenz-Arbeitspunkt, in dem Frequenzkorridor fₒₚₜ, so kehrt die Steuereinheit 2 in den Modus zur Laufzeitkorrektur zurück (Schritt S601).

Liegt die Frequenz f_{sw} für die Taktung der Schalter des resonanten Wandlers 1 außerhalb des Frequenzkorridors fₒₚₜ, so kehrt die Steuereinheit zu Schritt S602 zurück, in dem die Busspannung V_{bus} korrigiert wird. Folglich regelt/steuert die Laufzeitsteuerung die Busspannung V_{bus}, so dass die Arbeitsfrequenz f_{sw} für die Taktung der Schalter des resonanten Wandlers 1 innerhalb des Frequenzkorridors fₒₚₜ gehalten wird.

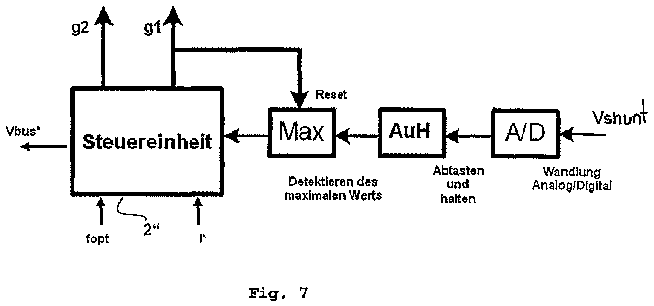

Eine Steuereinheit 2" kann insbesondere einen Spitzenwert Max (Peak-Value) für die Rückführgröße erfassen. Dies wird nun mit Blick auf Fig. 7 beschrieben.

Dazu wird die Rückführgröße (Spannung/Strom am Messwiderstand/Shunt) zunächst durch einen Analog/Digitalwandler (A/D-Wandler) digitalisiert. Anschließend wird die Rückführgröße, z.B. die Spannung Vₛₕᵤₙₜ, abgetastet (sampling) und der jeweils höhere Abtastwert gespeichert (gehalten) . Dies ist auch als "Sample and Hold" ("Abtasten und halten", in Fig. 7) bekannt.

Synchron zur Schaltung des potential niedrigeren Schalters der Halbbrücke des resonanten Wandlers 1 (Schalter S1 in Fig. 3) wird der bisher erfasste Spitzenwert Max für die Rückführgröße durch die Steuereinheit 2" zurückgesetzt (Reset). Somit erfolgt eine Spitzenwerterfassung (Peak-Value) für die Rückführgröße für jede Einschaltzeitdauer des potential niedrigeren Schalters der Halbbrücke.

Diese Art der Stromerfassung kann weiter auch für eine Fehlererfassung auf der Sekundärseite ausgewertet werden (beispielsweise zur Erfassung eines Kurzschlusszustands) . Bei einem solchen Fehlerzustand verändert sich der Wert für die Rückführgröße unzulässig, z.B. steigt/fällt über/unter einen Grenzwert. Beispielsweise kann der primärseitig erfasste Strom Iₛₑₙₛₑ unzulässig hoch ansteigen.

Wird ein solcher Fehlerzustand erkannt, so kann die Steuereinheit 2, 2', 2" Maßnahmen ergreifen, um eine Zerstörung des resonanten Wandlers 1, 1' zu verhindern. Diese Maßnahmen können beispielsweise in einer Veränderung der Taktung bzw. des Tastverhältnisses der Halbbrücke bestehen, und/oder die Frequenz f_{sw} der Halbbrücke kann verändert werden, um die übertragene Leistung zu reduzieren. Alternativ oder zusätzlich ist zudem eine komplette Abschaltung des LED-Konverters 10, 10' durch die Steuereinheit 2, 2', 2" möglich.

Vorteil der Erfassung des Spitzenwertes Max ist, dass die Steuereinheit 2, 2', 2" die Busspannung V_{bus} basierend auf dem aktuellen Spitzenwert für die Rückführgröße direkt verändern, ohne dass eine Integration oder Mittelung durch die Steuereinheit 2, 2', 2" erfolgen muss, und auch direkt auf die durch den resonanten Wandler übertragene Leistung zurückschließen kann.

Wichtig ist indessen, dass vorzugsweise dieser Spitzenwert Max ohne weitere Kombination mit anderen elektrischen Größen, insbesondere ohne beispielsweise Multiplikation mit der Busspannung V_{bus}, als Rückführgröße für die Steuerung/Regelung der durch den resonanten Wandler 1, 1' übertragenen Leistung verwendet wird. Steuergröße ist wie gesagt z.B. die Schaltfrequenz der Schalter der Halbbrücke des resonanten Wandlers. Insbesondere kann vorzugsweise auf eine Rückführung von sekundärseitig erfassten elektrischen Größen verzichtet werden.

Zusätzlich zur Erfassung des Spitzenwertes Max des primärseitig erfassten Stromes Iₛₑₙₛₑ können auch weitere Kennwerte des erfassten Stromes Iₛₑₙₛₑ erfasst und ausgewertet werden. Beispielsweise kann die Phasenlage des Stromes Iₛₑₙₛₑ in Bezug auf die Spannung an dem potentialniedrigeren Schalter S1 der Halbbrücke zu dem Zeitpunkt des Erreichens des Spitzenwertes Max oder aber die Phasenlage des Stromes Iₛₑₙₛₑ zum Zeitpunkt des Öffnens des potentialniedrigeren Schalter S1 bei der Taktung, also der Frequenz f_{sw} und/oder des Tastverhältnisses, der Halbbrücke berücksichtigt werden.

Es ist dabei zu verstehen, dass die oben beschriebenen Verfahren und Verfahrensschritte auch durch eine integrierte Schaltung, insbesondere durch einen Mikrokontroller oder eine ASIC oder eine Kombination aus beiden ausgeführt werden kann/können.

Die Steuereinheit, kann eine Rückführgröße, insbesondere einen Istwert, in dem resonanten Wandler ermitteln und die Frequenz der Taktung basierend auf der Rückführgröße einstellen, wobei die Rückführgröße eine Größe sein kann, die die durch den resonanten Wandler übertragene Leistung wiedergibt. Die Rückführgröße kann insbesondere ein Strom/eine Spannung in dem resonanten Wandler sein oder ein ihn/sie wiedergebender elektrischer Parameter.

Die Steuereinheit kann beim Einschalten des LED-Konverters, insbesondere beim Anlegen einer Netzspannung, die Frequenz der Taktung so einstellen, dass der Frequenz-Arbeitspunkt in dem Frequenzkorridor liegt. Ob der Frequenz-Arbeitspunkt in dem Frequenzkorridor liegt kann über die Rückführgröße ermittelt werden. Die Steuereinheit kann gleichzeitig die den resonanten Wandler versorgende Gleichspannung auf eine möglichst geringe Gleichspannung, insbesondere mit kleiner Amplitude, einstellen.

Die Steuereinheit kann die den resonanten Wandler versorgende Gleichspannung graduell erhöhen, bis ein Schwellwert für die Rückführgröße erreicht ist.

Die Steuereinheit kann die den resonanten Wandler versorgende Gleichspannung konstant halten, wenn der Schwellwert erreicht wurde.

Die Steuereinheit kann eine Laufzeitsteuerung durchführen und während der Laufzeitsteuerung die die Rückführgröße ermitteln. Die Steuereinheit kann basierend auf der die Rückführgröße erkennen, ob der Frequenz-Arbeitspunkt in dem Frequenzkorridor liegt.

Die Steuereinheit kann die den resonanten Wandler versorgende Gleichspannung anpassen, wenn die Überprüfung der Rückführgröße während der Laufzeitsteuerung ergibt, dass der Frequenz-Arbeitspunkt außerhalb des Frequenzkorridors liegt und/oder aus ihm führen würde.

Die Steuereinheit kann die Laufzeitsteuerung nach Erreichen des Schwellwerts durchführen.

Eine Änderung der Last kann aus einer Änderung der Anzahl und/oder der Art der betriebenen LEDs der LED-Strecke und oder aus einer Temperaturänderung resultieren.

## Patentansprüche

1. LED-Konverter (10) zum Betrieb einer Last aus wenigstens einer LED-Strecke (6) mit wenigstens einer LED, vorzugsweise mit mehreren LEDs, wobei
der LED-Konverter (10) primärseitig einen mit einer Gleichspannung (V_{bus}) versorgten resonanten Wandler (1) umfasst, der eine mit zwei wechselseitig getakteten Schaltern (S1, S2) ausgebildete Halbbrücke aufweist, die über einen an ihrem Mittenpunkt angeschlossenen Serien/Parallel-Resonanzkreis eine Versorgungsspannung für die LED-Strecke (6) bereitstellt, wobei
der LED-Konverter (10) eine Steuereinheit (2) aufweist, die dazu eingerichtet ist, zur Regelung der durch den LED-Konverter (10) an die LED-Strecke übertragenen Leistung als zurückgeführten Istwert in jedem Einschaltzyklus des potentialniedrigeren Schalters (S1) einen Spitzenwert (Max) eines Stroms (Iₛₑₙₛₑ) durch den potentialniedrigeren Schalter (S1) der Halbbrücke direkt oder indirekt zu ermitteln und als Steuergröße die Taktung, also die Frequenz (f_{sw}) und/oder das Tastverhältnis, der Halbbrücke einzustellen, und
**dadurch gekennzeichnet, dass**
die Steuereinheit (2) dazu eingerichtet ist, einen sekundärseitigen Fehlerzustand, insbesondere einen Kurzschluss, zu erkennen, wenn der erfasste Spitzenwert (Max) einen Schwellwert erreicht.

2. LED-Konverter nach Anspruch 1, wobei die Steuereinheit (2) dazu eingerichtet ist, den Spitzenwert (Max) durch Abtasten und Halten einer Spannung (Vₛₕᵤₙₜ) /eines Stroms (Iₛₑₙₛₑ) an einem Messwiderstand zu ermitteln, und wobei die Steuereinheit (2) dazu eingerichtet ist, einen jeweils durch das Abtasten und Halten erfassten Wert zu speichern.

3. LED-Konverter nach Anspruch 1 oder 2, wobei die Steuereinheit (2) dazu eingerichtet ist, einen gespeicherten Wert synchronisiert zu der Schaltung des potentialniedrigeren Schalters (S1) der Halbbrücke zurückzusetzen.

4. LED-Konverter nach Anspruch 1, wobei die Steuereinheit (2) dazu eingerichtet ist, bei Erkennung eines Fehlerzustandes die Frequenz (f_{sw}) der Taktung und/oder ein Tastverhältnis der Halbbrücke zu verändern, und dadurch die übertragene Leistung zu verringern, und/oder den LED-Konverter (10) abzuschalten.

5. LED-Konverter nach einem der vorgehenden Ansprüche, wobei die Steuereinheit (2) dazu eingerichtet ist, die den resonanten Wandler (1) versorgende Gleichspannung (V_{bus}) durch eine Ansteuerung eines Schalters einer PFC-Schaltung (4) einzustellen.

6. LED-Konverter nach einem der vorgehenden Ansprüche, wobei die Steuereinheit (2) dazu eingerichtet ist, einen Sollwert (V_{bus*}) für die den resonanten Wandler (1) versorgende Gleichspannung (V_{bus}) an eine PFC-Schaltung (4) zu übermitteln.

7. LED-Konverter nach einem der vorgehenden Ansprüche, wobei die Steuereinheit (2) dazu eingerichtet ist, die den resonanten Wandler (1) versorgende Gleichspannung (V_{bus}) durch eine Ansteuerung eines Schalters einer PFC-Schaltung (4) einzustellen.

8. LED-Konverter nach einem der vorgehenden Ansprüche, wobei die Steuereinheit (2) dazu eingerichtet ist, einen Sollwert (V_{bus*}) für die den resonanten Wandler (1) versorgende Gleichspannung (V_{bus}) an eine PFC-Schaltung (4) zu übermitteln.

9. Verfahren zum Betrieb eines LED-Konverters (10) zum Betrieb einer Last aus wenigstens einer LED-Strecke (6) mit wenigstens einer LED, vorzugsweise mit mehreren LEDs, wobei
der LED-Konverter (10) primärseitig einen mit einer Gleichspannung (V_{bus}) versorgten resonanten Wandler (1) umfasst, der eine mit zwei wechselseitig getakteten Schaltern (S1, S2) ausgebildete Halbbrücke aufweist, die über einen an ihrem Mittenpunkt angeschlossenen Serien/Parallel-Resonanzkreis eine Versorgungsspannung für die LED-Strecke (6) bereitstellt, mit den Verfahrensschritten: direktes oder indirektes Ermitteln eines Spitzenwerts des Stroms (Iₛₑₙₛₑ) durch den potentialniedrigeren Schalter (S1) der Halbbrücke mittels einer Steuereinheit (2") zur Regelung der durch den LED-Konverter an die LED-Strecke (6) übertragenen Leistung als zurückgeführten Istwert in jedem Einschaltzyklus ; und
Einstellen der Taktung, also der Frequenz (f_{sw}) und/oder dem Tastverhältnis, der Halbbrücke als Steuergröße, und
**dadurch gekennzeichnet, dass**
die Steuereinheit (2) einen sekundärseitigen Fehlerzustand, insbesondere einen Kurzschluss, erkennt, wenn der erfasste Spitzenwert (Max) einen Schwellwert erreicht.

10. Verfahren nach Anspruch 9, wobei die Steuereinheit (2) den Spitzenwert (Max) durch Abtasten einer Spannung (Vₛₕᵤₙₜ) /eines Stroms (Iₛₑₙₛₑ) an einem Messwiderstand ermittelt, und wobei die Steuereinheit (2) einen jeweils durch das Abtasten erfassten höheren Wert, den momentanen Spitzenwert, speichert.

11. Verfahren nach Anspruch 9 oder 10, wobei die Steuereinheit (2) einen gespeicherten Wert synchronisiert zu der Schaltung des potentialniedrigeren Schalters (S1) der Halbbrücke zurücksetzt.

12. Verfahren nach Anspruch 9, wobei die Steuereinheit bei Erkennung eines Fehlerzustandes die Frequenz (f_{sw}) der Taktung und/oder ein Tastverhältnis der Halbbrücke verändert, und dadurch die übertragene Leistung verringert, und/oder den LED-Konverter (10) abschaltet.

13. Verfahren nach einem der Ansprüche 9 bis 12, wobei die Steuereinheit (2) die den resonanten Wandler (1) versorgende Gleichspannung (V_{bus}) durch eine Ansteuerung eines Schalters einer PFC-Schaltung (4) einstellt.

14. Verfahren nach einem der Ansprüche 9 bis 13, wobei die Steuereinheit (2) einen Sollwert (V_{bus*}) für die den resonanten Wandler (1) versorgende Gleichspannung (V_{bus}) an eine PFC-Schaltung (4) übermittelt.

15. Verfahren nach einem der Ansprüche 9 bis 14, wobei der Serien/Parallel-Resonanzkreis einen Transformator (3) versorgt, der an seinem Ausgang sekundärseitig die Versorgungsspannung für die LED-Strecke (6) bereitstellt.

16. Verfahren nach einem der Ansprüche 9-15, wobei sekundärseitig, vorzugsweise an einem Ausgang des Transformators (3), eine Diodenschaltung einen Speicherkondensator (5) speist, der die Versorgungsspannung für die LED-Strecke (6) bereitstellt.

17. Integrierte Schaltung, vorzugsweise Microcontroller und/oder ASIC, die zur Durchführung eines Verfahrens nach einem der Ansprüche 9 bis 16 ausgeführt und/oder programmiert ist.

## Claims

1. LED converter (10) for operating a load consisting of at least one LED strip (6) having at least one LED, preferably a plurality of LEDs, the LED converter (10) comprising, on the primary side, a resonant converter (1) which is supplied with a DC voltage (V_{bus})
and has a half bridge which is formed with two alternately clocked switches (S1, S2) and provides a supply voltage for the LED strip (6) via a series/parallel resonant circuit connected at its center point,
the LED converter (10) having a control unit (2) which, in order to control the power transmitted by the LED converter (10) to the LED strip, as a fed-back actual value in each switch-on cycle of the lower-potential switch (S1), is designed to directly or indirectly determine a peak value (Max) of a current (Iₛₑₙₛₑ) through a lower-potential switch (S1) of the half bridge, and to set the clocking, i.e. the frequency (f_{sw}) and/or the duty cycle, of the half bridge as a control variable,
**characterized in that**
the control unit (2) is designed to identify a secondary-side fault state, in particular a short circuit, when the detected peak value (Max) reaches a threshold value.

2. LED converter according to claim 1, wherein the control unit (2) is designed to determine the peak value (Max) by sampling and holding a voltage (V_{Shunt})/current (Iₛₑₙₛₑ) at a measuring resistor, and wherein the control unit (2) is designed to store a value detected in each case by the sampling and holding.

3. LED converter according to either claim 1 or claim 2, wherein the control unit (2) is designed to reset a stored value in synchronization with the circuit of the lower-potential switch (S1) of the half bridge.

4. LED converter according to claim 1, wherein the control unit (2) is designed, upon detection of a fault state, to change the frequency (f_{sw}) of the clocking and/or a duty cycle of the half bridge, and thus to reduce the transmitted power and/or to switch off the LED converter (10).

5. LED converter according to any of the preceding claims, wherein the control unit (2) is designed to adjust the DC voltage (V_{bus}) supplying the resonant converter (1) by actuating a switch of a PFC circuit (4).

6. LED converter according to any of the preceding claims, wherein the control unit (2) is designed to transmit a setpoint value (V_{bus*}) for the DC voltage (V_{bus}) supplying the resonant converter (1) to a PFC circuit (4).

7. LED converter according to any of the preceding claims, wherein the control unit (2) is designed to adjust the DC voltage (V_{bus}) supplying the resonant converter (1) by actuating a switch of a PFC circuit (4).

8. LED converter according to any of the preceding claims, wherein the control unit (2) is designed to transmit a setpoint value (V_{bus*}) for the DC voltage (V_{bus}) supplying the resonant converter (1) to a PFC circuit (4).

9. Method for operating an LED converter (10) for operating a load consisting of at least one LED strip (6) having at least one LED, preferably a plurality of LEDs,
the LED converter (10) comprising, on the primary side, a resonant converter (1) which is supplied with a DC voltage (V_{bus})
and has a half bridge which is formed with two alternately clocked switches (S1, S2) and provides a supply voltage for the LED strip (6) via a series/parallel resonant circuit connected at its center point, comprising the method steps of: directly or indirectly determining a peak value of the current (Iₛₑₙₛₑ) through the lower-potential switch (S1) of the half bridge by means of a control unit (2") in order to control the power transmitted by the LED converter to the LED strip (6) as a fed-back actual value in each switch-on cycle; and
setting the clocking, i.e. the frequency (f_{sw}) and/or the duty cycle of the half bridge as a control variable,
**characterized in that**
the control unit (2) identifies a secondary-side fault state, in particular a short circuit, when the detected peak value (Max) reaches a threshold value.

10. Method according to claim 9, wherein
the control unit (2) determines the peak value (Max) by sampling a voltage (Vₛₕᵤₙₜ)/current (Iₛₑₙₛₑ) at a measuring resistor, and wherein the control unit (2) stores a higher value detected in each case by the sampling, the instantaneous peak value.

11. Method according to either claim 9 or claim 10, wherein the control unit (2) resets a stored value in synchronization with the circuit of the lower-potential switch (S1) of the half bridge.

12. Method according to claim 9, wherein, upon detection of a fault state, the control unit changes the frequency of the clocking (f_{sw}) and/or a duty cycle of the half bridge, and thus reduces the transmitted power and/or switches off the LED converter (10).

13. Method according to any of claims 9 to 12, wherein the control unit (2) adjusts the DC voltage (V_{bus}) supplying the resonant converter (1) by actuating a switch of a PFC circuit (4).

14. Method according to any of claims 9 to 13, wherein the control unit (2) transmits a setpoint value (V_{bus*}) for the DC voltage (V_{bus}) supplying the resonant converter (1) to a PFC circuit (4).

15. Method according to any of claims 9 to 14, wherein the series/parallel resonant circuit supplies a transformer (3) which provides the supply voltage for the LED strip (6) on the secondary side at its output.

16. Method according to any of claims 9 to 15, wherein a diode circuit supplies a storage capacitor (5) on the secondary side, preferably at an output of the transformer (3), which storage capacitor provides the supply voltage for the LED strip (6).

17. Integrated circuit, preferably a microcontroller and/or an ASIC, which is designed and/or programmed to carry out a method according to any of claims 9 to 16.

## Revendications

1. Convertisseur DEL (10) permettant de faire fonctionner une charge provenant d'au moins une section de DEL (6) comportant au moins une DEL, de préférence comportant plusieurs DEL, le convertisseur DEL (10) comprenant, sur le côté primaire, un transducteur (1) résonnant alimenté par une tension continue (V_{bus}),
lequel transducteur présente un demi-pont formé de deux commutateurs (S1, S2) mutuellement synchronisés, ledit demi-pont fournissant une tension d'alimentation pour la section de DEL (6) par l'intermédiaire d'un circuit à résonance série/parallèle raccordé au point milieu dudit demi-pont, dans lequel
le convertisseur DEL (10) présente une unité de commande (2) configurée pour déterminer directement ou indirectement, pour la régulation de la puissance transmise par le convertisseur DEL (10) à la section de DEL comme valeur réelle en circulation dans chaque cycle d'enclenchement du commutateur (S1) à potentiel inférieur, une valeur de crête (Max) d'un courant (Iₛₑₙₛₑ) à travers le commutateur (S1) à potentiel inférieur du demi-pont, et pour régler la synchronisation du demi-pont, c'est-à-dire la fréquence (f_{sw}) et/ou le rapport cyclique, comme variable de commande, et
**caractérisé en ce que**
l'unité de commande (2) est configurée pour identifier un état d'erreur sur le côté secondaire, en particulier un court-circuit, lorsque la valeur de crête (Max) détectée atteint une valeur seuil.

2. Convertisseur DEL selon la revendication 1, dans lequel l'unité de commande (2) est configurée pour déterminer la valeur de crête (Max) en échantillonnant et en bloquant une tension (Vₛₕᵤₙₜ)/un courant (Iₛₑₙₛₑ) aux bornes d'une résistance de mesure, et dans lequel l'unité de commande (2) est configurée pour enregistrer une valeur respectivement détectée par l'échantillonnage et le blocage.

3. Convertisseur DEL selon la revendication 1 ou 2, dans lequel l'unité de commande (2) est configurée pour réinitialiser une valeur enregistrée de manière synchronisée avec le circuit du commutateur (S1) à potentiel inférieur du demi-pont.

4. Convertisseur DEL selon la revendication 1, dans lequel l'unité de commande (2) est configurée pour modifier la fréquence (f_{sw}) de la synchronisation et/ou un rapport cyclique du demi-pont lorsqu'un état d'erreur est détecté, et pour réduire ainsi la puissance transmise, et/ou pour désactiver le convertisseur DEL (10).

5. Convertisseur DEL selon l'une quelconque des revendications précédentes, dans lequel l'unité de commande (2) est configurée pour régler la tension continue (V_{bus}) alimentée au transducteur (1) résonnant par une commande d'un commutateur d'un circuit PFC (4).

6. Convertisseur DEL selon l'une quelconque des revendications précédentes, dans lequel l'unité de commande (2) est configurée pour transmettre, à un circuit PFC (4), une valeur de consigne (V_{bus*}) pour la tension continue (V_{bus}) alimentée au transducteur (1) résonnant.

7. Convertisseur DEL selon l'une quelconque des revendications précédentes, dans lequel l'unité de commande (2) est configurée pour régler la tension continue (V_{bus}) alimentée au transducteur (1) résonnant par une commande d'un commutateur d'un circuit PFC (4).

8. Convertisseur DEL selon l'une quelconque des revendications précédentes, dans lequel l'unité de commande (2) est configurée pour transmettre, à un circuit PFC (4), une valeur de consigne (V_{bus*}) pour la tension continue (V_{bus}) alimentée au transducteur (1) résonnant.

9. Procédé permettant de faire fonctionner un convertisseur DEL (10) permettant de faire fonctionner une charge provenant d'au moins une section de DEL (6) comportant au moins une DEL, de préférence comportant plusieurs DEL, dans lequel
le convertisseur DEL (10) comprend, sur le côté primaire, un transducteur (1) résonnant alimenté par une tension continue (V_{bus}),
lequel transducteur présente un demi-pont formé de deux commutateurs (S1, S2) mutuellement synchronisés, ledit demi-pont fournissant une tension d'alimentation pour la section de DEL (6) par l'intermédiaire d'un circuit à résonance série/parallèle raccordé au point milieu du demi-pont, comportant les étapes de procédé de : détermination directe ou indirecte d'une valeur de crête du courant (Iₛₑₙₛₑ) par le commutateur (S1) à potentiel inférieur du demi-pont à l'aide d'une unité de commande (2"), pour la régulation de la puissance transmise par le convertisseur DEL à la section de DEL (6) comme valeur réelle en circulation dans chaque cycle d'enclenchement ; et
réglage de la synchronisation du demi-pont, c'est-à-dire de la fréquence (f_{sw}) et/ou du rapport cyclique, comme variable de commande, et
**caractérisé en ce que**
l'unité de commande (2) identifie un état d'erreur sur le côté secondaire, en particulier un court-circuit, lorsque la valeur de crête (Max) détectée atteint une valeur seuil.

10. Procédé selon la revendication 9, dans lequel
l'unité de commande (2) détermine la valeur de crête (Max) en échantillonnant une tension (V_{Shunt})/un courant (Iₛₑₙₛₑ) aux bornes d'une résistance de mesure, et dans lequel l'unité de commande (2) enregistre une valeur la plus élevée, la valeur de crête instantanée, respectivement détectée par l'échantillonnage.

11. Procédé selon la revendication 9 ou 10, dans lequel l'unité de commande (2) réinitialise une valeur enregistrée de manière synchronisée avec le circuit du commutateur (S1) à potentiel inférieur du demi-pont.

12. Procédé selon la revendication 9, dans lequel l'unité de commande modifie la fréquence (f_{sw}) de la synchronisation et/ou un rapport cyclique du demi-pont lorsqu'un état d'erreur est détecté, et réduit ainsi la puissance transmise, et/ou désactive le convertisseur DEL (10).

13. Procédé selon l'une des revendications 9 à 12, dans lequel l'unité de commande (2) règle la tension continue (V_{bus}) alimentée au transducteur (1) résonnant par une commande d'un commutateur d'un circuit PFC (4).

14. Procédé selon l'une des revendications 9 à 13, dans lequel l'unité de commande (2) transmet, à un circuit PFC (4), une valeur de consigne (V_{bus*}) pour la tension continue (V_{bus}) alimentée au transducteur (1) résonnant.

15. Procédé selon l'une des revendications 9 à 14, dans lequel le circuit à résonance série/parallèle alimente un transformateur (3) qui fournit à sa sortie sur le côté secondaire la tension d'alimentation pour la section de DEL (6).

16. Procédé selon l'une des revendications 9 à 15, dans lequel, sur le côté secondaire, de préférence à une sortie du transformateur (3), un circuit à diodes alimente un condensateur de stockage (5) qui fournit la tension d'alimentation pour la section de DEL (6).

17. Circuit intégré, de préférence microcontrôleur et/ou ASIC, configuré et/ou programmé pour l'exécution d'un procédé selon l'une des revendications 9 à 16.
